# EUROPÄISCHE PATENTSCHRIFT

(11) **EP 1 930 232 B1**
(45) Veröffentlichungstag und Bekanntmachung des Hinweises auf die Patenterteilung: **08.07.2009**
(21) Anmeldenummer: 07023401.8
(22) Anmeldetag: 04.12.2007
(51) Int. Cl.: B62J 9/00

(54) **Tankrucksack mit Kartentasche für Krafträder**
Tank rucksack with map case for motorcycles
Sacoche de réservoir dotée d'un porte carte pour motocyclette

(30) Priorität: 07.12.2006 DE 202006018661 U
(43) Veröffentlichungstag der Anmeldung: 11.06.2008
(73) Patentinhaber: POLO EXPRESSVERSAND Gesellschaft für Motorradbekleidung und Sportswear mbH, 40589 Düsseldorf (DE)
(72) Erfinder: Evers, Marco, 41812 Erkelenz (DE); Zass, René, 40764 Langenfeld (DE)
(74) Vertreter: Kluin, Jörg-Eden

(56) Entgegenhaltungen:
- DE-A1- 4 107 008
- JP-A- 8 053 086
- JP-A- 2006 298 090
- US-B1- 6 305 590

## Beschreibung

Die Erfindung betrifft einen Tankrucksack für Krafträder, mit einer Gepäckaufnahme und mit einer auf der Oberseite der Gepäckaufnahme vorgesehenen Kartentasche mit einer durchsichtigen Oberwandung.

Bauartbedingt bieten Krafträder wenig Stauraum und Ablagemöglichkeiten für Gepäckstücke, Straßenkarten oder dergleichen. Bereits seit langem schaffen hier Tankrucksäcke Abhilfe, die auf dem Tank eines Kraftrades befestigt werden.

Derartige Tankrucksäcke sind in vielfachen Ausführungsformen bekannt. Besonders praktisch sind solche Tankrucksäcke, die eine Gepäckaufnahme mit variablem Volumen aufweisen. Bei diesen Tankrucksäcken können die äußeren Abmessungen in Abhängigkeit des zu transportierenden Volumens möglichst klein gehalten werden, was insbesondere deshalb wünschenswert ist, da ein großes Volumen des Tankrucksackes insbesondere bei sportlichen Krafträdern, bei denen die Lenker tief in Lenkkopfnähe angeordnet sind und der Fahrer zur Reduzierung des Luftwiderstandes eine nach vom gebeugte, flache Haltung einnimmt, das Erreichen des Lenkers behindern. Darüber hinaus verschlechtert sich tendenziell mit zunehmendem Tankrucksackvolumen das Fahrverhalten des Motorrads. Schließlich erhöht sich mit wachsendem Volumen auch die auf die Befestigung des Tankrucksacks durch den Fahrtwind wirkenden Kräfte, so dass auch zur Vermeidung einer Überlastung der Befestigungseinrichtungen ein möglichst geringes Tankrucksackvolumen wünschenswert ist.

Es sind Tankrucksäcke bekannt, bei denen die Gepäckaufnahme modular aufgebaut ist. Zur Anpassung des Volumens können mehr oder weniger Module beispielsweise über Klett- oder Reißverschlussverbindungen zusammen auf dem Tank des Kraftrades befestigt werden.

Darüber hinaus sind Tankrucksäcke mit Gepäckaufnahmen bekannt, bei welchen ein Teil der Gepäckaufnahme durch zwei voneinander beabstandet angeordnete Ösenreihen durch laufende Bänder oder Gurte verkleinert oder vergrößert werden können, indem die Bänder oder Gurte angezogen oder gelöst werden, wodurch sich das zwischen den Ösenreihen befindlichen, flexible Material des Tankrucksacks mehr oder weniger in Falten legt.

Ferner weisen bekannte Tankrucksäcke an deren Oberseiten regelmäßig Kartentaschen mit einer durchsichtigen Oberwandung auf, in welche Straßenkarten zur Orientierung des Kraftradfahrers eingelegt werden können (siehe z.B. DE-A-4 107 008).

Es besteht nun das Problem, dass die Kartentaschen zwar auf einfache Weise zumindest im wesentlichen wasserdicht und damit resistent gegen Regen ausgestaltet werden können, da die durchsichtigen Oberwandungen meist aus thermoplastischen Kunststoffen bestehen, von denen auf einfache Weise mehrere Lagen unter Ausbildung von Taschen miteinander verschweißt werden können. Die Gepäckaufnahme des Tankrucksacks umfasst jedoch zumeist Wandungen aus textilem Material, die an ihren Rändern miteinander vernäht sind, um die nötige Stabilität und Reißfestigkeit zum Gepäcktransport aufzuweisen. Sowohl das Material an sich, als auch die Nähte sind jedoch nicht so beschaffen, dass ein Eindringen von Feuchtigkeit beim Fahren im Regen verhindert wird.

Zur Verminderung des Eindringens von Flüssigkeit sind im Handel aus wasserdichter Folie oder aus folienbeschichtetem Gewebe hergestellte Hüllen erhältlich, die im Falle einsetzenden Regens über den Tankrucksack gezogen werden können. Um eine gegebenenfalls in das an der Oberseite der Gepäckaufnahme befestigte Kartentasche eingelegte Straßenkarte weiterhin lesen zu können, sind in die Umhüllungen durchsichtige Fenster eingearbeitet, die ein Erkennen der Straßenkarte trotz aufgezogener Umhüllung ermöglichen sollen.

In der Praxis hat sich gezeigt, dass die Verwendung derartiger Hüllen unter anderem die folgenden Nachteile aufweisen:
1. Es befinden sich zwei Lagen durchsichtigen, flexiblen Materials oberhalb der Straßenkarte, worunter die Erkennbarkeit von Kartendetails erheblich leidet.
2. Je nach Füllungsgrad des Tankrucksacks stimmt die Position des Fensters in der Umhüllung mit der durchsichtigen Oberwandung der Kartentasche nicht vollständig überein, so dass Kartenteile von der Hülle überdeckt werden.
3. Aus dem Gewebe der Gepäckaufnahme ausgetretene Feuchtigkeit kondensiert an der Innenseite des Fensters der Umhüllung, so dass die Straßenkarte nicht mehr erkennbar ist.

Der Erfindung liegt daher die Aufgabe zugrunde, einen Tankrucksack mit Kartentasche für Krafträder der eingangs genannten Art derart weiterzubilden, dass die Erkennbarkeit einer in einer Kartentasche mit durchsichtiger Oberwandung befindlichen Straßenkarte im Regen verbessert ist.

Diese Aufgabe wird durch den in Anspruch 1 wiedergegebenen Tankrucksack gelöst.

Dadurch, dass die Kartentasche mit magnetisch wirkenden Mitteln wahlweise an der Gepäckaufnahme befestigbar ist, kann sie im Falle einsetzenden Regens von der Gepäckaufnahme abgenommen und nach Überziehen der Regenhülle aufgesetzt werden, ohne dass es hierzu irgendwelcher Maßnahmen an der Regenhülle bedarf. Insbesondere kann die Regenhülle ohne Fenster ausgebildet werden, was ihre Herstellung vereinfacht und verbilligt. Darüber hinaus werden die oben genannten Nachteile vermieden, die aufgrund zweier übereinander angeordneter, durchsichtiger Folien vorhanden wären. Die Funktionalität des erfindungsgemäßen Tankrucksacks ist daher auf besonders einfache Weise wesentlich verbessert.

Besonders bevorzugt ist es, wenn zur Ausbildung der magnetisch wirkenden Mitteln an der Kartentasche und/oder an der Gepäckaufnahme mindestens ein Permanentmagnet vorgesehen ist, welcher mit einem an der Gepäckaufnahme und/oder an der Kartentasche vorgesehenen ferromagnetischen Material oder einem Permanentmagneten umgekehrter Polung in Wirkverbindung bringbar ist. Versuche haben gezeigt, dass selbst bei relativ kleinvolumigen Permanentmagneten in dem einen Teil des Tankrucksacks selbst dann, wenn in dem anderen Teil des Tankrucksacks an entsprechenden Stellen lediglich ferromagnetisches Material vorgesehen ist, ausreichende Haltekräfte selbst bei zwischenliegender Regenhülle erzielbar sind, um auch bei starkem Fahrtwind ein selbsttätiges Lösen der Kartentasche zu verhindern. Um die Haltekräfte zu erhöhen, können in beiden Teilen des Tankrucksacks an sich zumindest teilweise überdeckenden Stellen Permanentmagneten vorgesehen sein, die dann mit ungleichnamigen Polen einander zugewandt sein müssen.

Besonders bevorzugt ist es, wenn jedenfalls in der Kartentasche mindestens ein Permanentmagnet vorgesehen ist. In diesem Falle kann die Kartentasche ohne die weiteren Teile des Tankrucksacks an Kraftradtanks durch einfaches Auflegen befestigt werden, sofern diese - wie in den meisten Fällen - aus ferromagnetischem Material, beispielsweise Stahlblech, gefertigt sind. Diese durch die erfindungsgemäße Ausgestaltung des Tankrucksacks erreichte Verwendungsweise ist beispielsweise bei Kurzfahrten ohne Gepäck oder am Urlaubsort von besonderer Bedeutung, da zur Verwendung der Kartentasche nicht der Rest des Tankrucksacks mitgeführt werden muss. Der erfindungsgemäße Tankrucksack zeichnet sich durch eine besonders vielseitige Verwendbarkeit aus.

Bei einer bevorzugten konstruktiven Variante des erfindungsgemäßen Tankrucksacks umfasst die Kartentasche von der durchsichtigen Oberwandung seitlich vorstehende Laschen, die jeweils mindestens einen Permanentmagneten oder - für den Fall, dass die Gepäckaufnahme mit Permanentmagneten ausgerüstet ist - auch ferromagnetisches Material umfassen. Die Laschen können hierbei als sich zumindest im wesentlichen ringsum die durchsichtige Oberwandung der Kartentasche erstreckender Rand ausgebildet sein. Oder es sind ringsum die durchsichtige Oberwandung verteilt vorstehende, zungenartige Laschen vorgesehen, die den Vorteil aufweisen, dass sie in der Lage sind, sich besser an Tanks mit engen Krümmungen anzulegen.

Bei einer besonders bevorzugten konstruktiven Variante des erfindungsgemäßen Tankrucksacks umfasst die Gepäckaufnahme im oberen Randbereich ihrer Seitenwandungen Taschen, in denen sich Permanentmagneten oder ferromagnetisches Material befindet, wobei die Taschen derart angeordnet sind, dass die Laschen der Kartentasche mit diesen Taschen zumindest teilweise in Überdeckung bringbar sind.

In der Zeichnung ist ein Ausführungsbeispiel eines erfindungsgemäßen Tankrucksacks schematisch dargestellt.

Es zeigen:

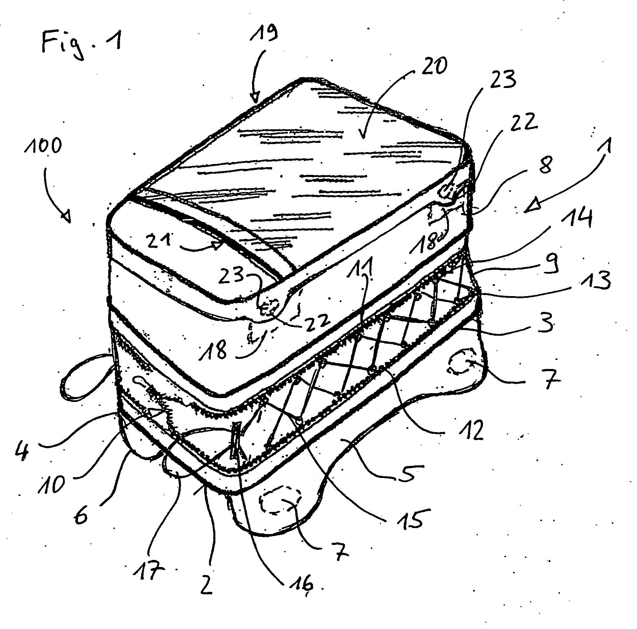

- Fig. 1: dieses Ausführungsbeispiel des erfindungsgemäßen Tankrucksacks in einer perspektivischen Ansicht von schräg oben;
- Fig. 2: dasselbe Ausführungsbeispiel in derselben Ansicht mit abgenommener Kartentasche;
- Fig. 3: dasselbe Ausführungsbeispiel des erfindungsgemäßen Tankrucksacks auf einem Motorrad montiert in einer Seitenansicht sowie
- Fig. 4: eine Darstellung gemäß Fig. 3, bei welcher nur das Kartenfach allein auf dem Motorrad montiert ist.

Der in der Zeichnung als Ganzes mit 100 bezeichnete Tankrucksack umfasst eine Gepäckaufnahme 1 mit einem Unterboden 2, an dessen seitlichen Längsrändern 3, 4 flexible Laschen 5, 6 angebracht sind. In den Laschen sind in der Zeichnung nur angedeutete Permanentmagnete 7 eingenäht, die der Halterung des Tankrucksacks 100 an einem Tank aus ferromagnetischem Material dienen. Eine Befestigung eines Tankrucksacks unter Ausnutzung magnetischer Wirkung ist beispielsweise aus der DE 28 31 481 C2 für sich genommen bekannt.

Die Gepäckaufnahme 1 des Tankrucksacks 100 besteht aus einem oberen, nicht höhenverstellbaren Teil 8 und einem Teil variabler Höhe 9. Das Teil 9 umfasst einen umlaufenden Reißverschluss 10, dessen eine Schließkette 11 am oberen Rand, dessen andere Schließkette 12 am unteren Rand des Teils 9 angebracht ist. In den Fig. ist der Tankrucksack 100 stets mit geöffnetem Reißverschluss 10 dargestellt, dessen unterer Teil 9 sich zur Volumenvergrößerung entfaltet. Zur Volumenreduzierung kann nun der Reißverschluss 10 unter Ineingriffbringen der Schließketten 11,12 geschlossen werden, wodurch der obere und der untere Rand des Teils 9 nahezu in Anlage miteinander gebracht werden.

Um die Gepäckaufnahme 1 des Tankrucksacks 100 auch an Volumina anpassen zu können, deren Werte zwischen dem durch den geschlossenen Reißverschluss definierten Minimalvolumen und dem durch den geöffneten Reißverschluss definierten Maximalvolumen liegen, sind an den oberen und unteren Rändern des Teiles 9 darüber hinaus Ösenreihen 13, 14 vorgesehen, durch welche eine überkreuz verlaufende Schnur 15 nach Art eines Schnürsenkels durchgefädelt ist. Die durch die Ösen verlaufende Länge der Schnur 15 kann durch Verkleinern oder Vergrößern einer durch eine Klemmeinrichtung 16 verlaufende Schlaufe 17 variiert werden.

Im Bereich des oberen Randes des oberen Teils 8 der Gepäckaufnahme 1 sind Abschnitte 18 aus ferromagnetischem Material eingearbeitet. Sie dienen der Befestigung einer Kartentasche 19, die der Aufnahme einer in der Zeichnung nicht dargestellten Straßenkarte dient. Die Kartentasche 19 umfasst eine durchsichtige Oberwandung 20, die in Fahrtrichtung gesehen nach hinten mit einem Öffnungsschlitz 21 zum Einführen der Straßenkarte versehen ist. Die Oberwandung 20 ist mit einer unteren Wandung rundum wasserdicht verschlossen.

Die Kartentasche 19 umfasst des weiteren eine umlaufende Lasche 22, in welcher Permanentmagnete 23 an Stellen untergebracht sind, die im aufgesetzten Zustand der Kartentasche auf den Abschnitten 18 aus ferromagnetischem Material zu liegen kommen, so dass die Permanentmagneten mit diesen Abschnitten in magnetische Wechselwirkung gelangen.

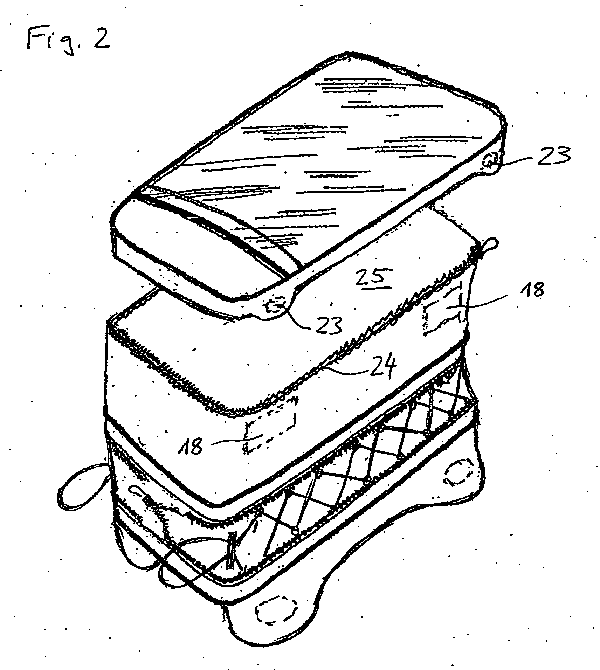

Wie insbesondere aus Fig. 2 sinnfällig wird, kann eine auf diese Weise befestigte Kartentasche einfach auf die Gepäckaufnahme 1, die - wie aus Fig. 2 erkennbar - einen mittels Reißverschluss 24 verschlossenen Deckel 25 umfasst einfach aufgesetzt oder abgenommen werden.

Aufgrund der Befestigung der Kartentasche 19 an der Gepäckaufnahme 1 durch Ausnutzung magnetischer Wirkung kann eine Befestigung auf dieselbe Weise erfolgen, wenn über die Gepäckaufnahme 1 eine in der Zeichnung nicht dargestellte Hülle beispielsweise zum Abweisen von Schmutz übergestülpt ist.

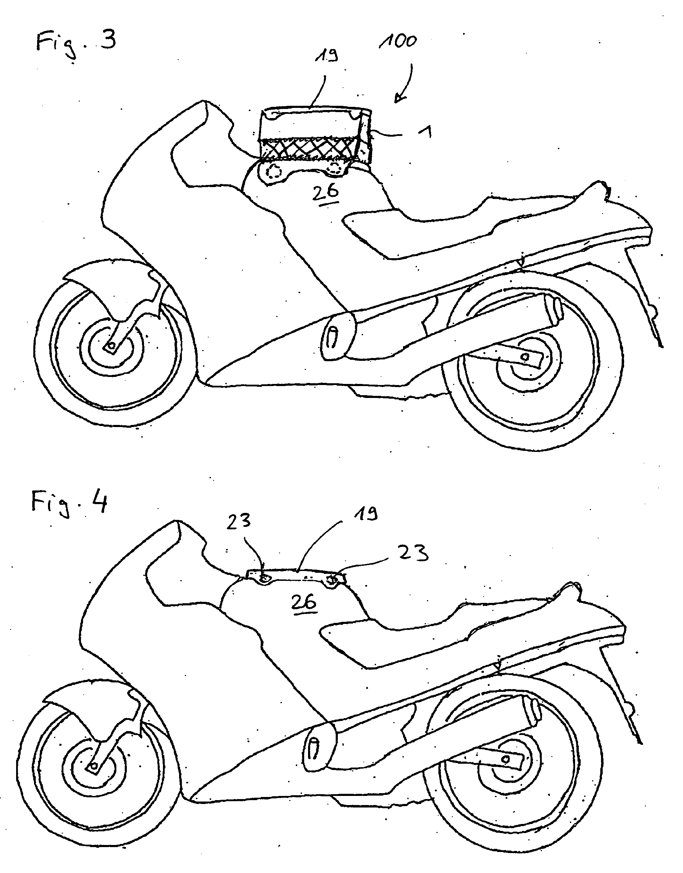

Zur Mitnahme von Gepäck auf einem Kraftrad kann der Tankrucksack 100 mit befestigter Kartentasche in einer schematischen in Fig. 3 erkennbaren Weise auf dem Tank 26 eines Kraftrades mitgeführt werden.

Wie aus Fig. 4 erkennbar ist, kann jedoch für den Fall, dass die Mitnahme von Gepäck nicht erforderlich ist, auch nur die Kartentasche 19 auf den Tank 26 aufgelegt werden, wobei deren Halt selbsttätig durch die Permanentmagneten 23 bewirkt wird.

### Bezugszeichenliste:

- 100: Tankrucksack
- 1: Gepäckaufnahme
- 2: Unterboden
- 3: Längsrand
- 4: Längsrand
- 5: Lasche
- 6: Lasche
- 7: Permanentmagnete
- 8: Teil
- 9: Teil
- 10: Reißverschluss
- 11: Schließkette
- 12: Schließkette
- 13: Ösenreihe
- 14: Ösenreihe
- 15: Schnur
- 16: Klemmeinrichtung
- 17: Schlaufe
- 18: Abschnitte aus ferromagnetischem Material
- 19: Kartentasche
- 20: Oberwandung
- 21: Öffnungsschlitz
- 22: Lasche
- 23: Permanentmagnete
- 24: Reißverschluss
- 25: Deckel
- 26: Tank

## Patentansprüche

1. Tankrucksack (100) für Krafträder,
mit einer Gepäckaufnahme (1)
und mit einer auf der Oberseite der Gepäckaufnahme (1) vorgesehenen Kartentasche (19) mit einer durchsichtigen Oberwandung (20),
**dadurch gekennzeichnet,**
**dass** die Kartentasche (19) mit magnetisch wirkenden Mitteln wahlweise an der Gepäckaufnahme (1) befestigbar ist.

2. Tankrucksack nach Anspruch 1, **dadurch gekennzeichnet, dass** an der Kartentasche (19) und/oder an der Gepäckaufnahme (1) mindestens ein Permanentmagnet (23) vorgesehen ist, welcher mit einem an der Gepäckaufnahme (1) und/oder an der Kartentasche (19) vorgesehenen ferromagnetischen Material (18) oder einem Permanentmagneten umgekehrter Polung in Wirkverbindung bringbar ist.

3. Tankrucksack nach Anspruch 1 oder 2, **dadurch gekennzeichnet, dass** an der Kartentasche (19) mindestens ein Permanentmagnet (23) vorgesehen ist.

4. Tankrucksack nach Anspruch 2 oder 3, **dadurch gekennzeichnet, dass** die Kartentasche (19) mindestens eine von der durchsichtigen Oberwandung (20) seitlich vorstehende Lasche (22) umfasst, die jeweils mindestens einen Permanentmagneten (23) oder ferromagnetisches Material umfasst.

5. Tankrucksack nach Anspruch 4, **dadurch gekennzeichnet, dass** die Gepäckaufnahme (1) im oberen Randbereich ihrer Seitenwandung Taschen umfasst, in denen sich Permanentmagneten oder Abschnitte (18) aus ferromagnetischem Material befinden, wobei die Permanentmagneten oder die Abschnitte aus ferromagnetischem Material derart angeordnet sind, dass die Laschen (22) der Kartentaschen mit den Permanentmagneten oder den Abschnitten (18) zumindest teilweise in Überdeckung bringbar sind.

## Claims

1. A tank bag (100) for motor cycles,
having a luggage receptacle (1)
and a map pocket (19) provided on the upper side of the luggage receptacle (1) and having a transparent upper wall (20);
**characterized in that**
the map pocket (19) can optionally be fastened to the luggage receptacle (1) using magnetic means.

2. A tank bag according to claim 1, **characterized in that** at least one permanent magnet (23) is provided on the map pocket (19) and/or on the luggage receptacle (1) which can be operationally connected to a ferromagnetic material (18) or a permanent magnet of opposite polarity provided on the luggage receptacle (1) and/or on the map pocket (19).

3. A tank bag according to claim 1 or claim 2, **characterized in that** at least one permanent magnet (23) is provided on the map pocket (19).

4. A tank bag according to claim 2 or claim 3, **characterized in that** the map pocket (19) comprises at least one tab (22) which projects laterally from the transparent upper wall (20) and which comprises at least one permanent magnet (23) or ferromagnetic material.

5. A tank bag according to claim 4, **characterized in that** the luggage receptacle (1) includes pockets in the upper edge region of its side wall in which permanent magnets or sections (18) of ferromagnetic material are provided, wherein the permanent magnets or the sections of ferromagnetic material are arranged so that the tabs (22) of the map pockets can at least partially overlap the permanent magnets or the sections (18).

## Revendications

1. Sacoche de réservoir (100) pour motocycles comportant un porte-cartes (19) sur le côté supérieur du porte-bagages (1) et ayant une paroi supérieure (20) transparente,
**caractérisée en ce que**
le porte-cartes (19) est fixé sélectivement au porte-bagages (1), par des moyens magnétiques.

2. Sacoche de réservoir selon la revendication 1,
**caractérisée en ce que**
le porte-cartes (19) et/ou le porte-bagages (1) comportent au moins un aimant permanent (23) coopérant avec une matière ferromagnétique (18) prévue sur le porte-bagages (1) et/ou le porte-cartes (19) ou encore avec un aimant permanent de polarité opposée.

3. Sacoche de réservoir selon la revendication 1 ou 2,
**caractérisée en ce que**
le porte-cartes (19) comporte au moins un aimant permanent (23).

4. Sacoche de réservoir selon la revendication 2 ou 3,
**caractérisée en ce que**
le porte-cartes (19) comprend au moins une patte (22) dépassant latéralement de la paroi supérieure (20), transparente, cette patte comprenant au moins un aimant permanent (23) ou ayant une matière ferromagnétique.

5. Sacoche de réservoir selon la revendication 4,
**caractérisée en ce que**
le porte-bagages (1) comporte des poches au niveau du bord supérieur de sa paroi latérale, poches recevant des aimants permanents ou des segments (18) de matériaux ferromagnétiques,
les aimants permanents ou les segments de matériaux ferromagnétiques étant installés pour que les pattes (22) du porte-cartes puissent être mises en concordance au moins en partie avec les aimants permanents ou les segments (18).
